# EUROPÄISCHE PATENTSCHRIFT

(11) **EP 1 077 397 B1**
(45) Veröffentlichungstag und Bekanntmachung des Hinweises auf die Patenterteilung: **14.01.2004**
(21) Anmeldenummer: 00116526.5
(22) Anmeldetag: 31.07.2000
(51) Int. Cl.: G05B 23/02

(54) **Verfahren und Vorrichtung zur Videoüberwachung von Prozessanlagen**
Method and device for video-monitoring of processes
Procédé et dispositif pour la vidéo-surveillance de processus

(30) Priorität: 17.08.1999 DE 19938964
(43) Veröffentlichungstag der Anmeldung: 21.02.2001
(73) Patentinhaber: SIEMENS AKTIENGESELLSCHAFT, 80333 München (DE)
(72) Erfinder: Bieber, Jürgen, 76275 Ettlingen (DE)

(56) Entgegenhaltungen:
- EP-A- 0 501 784
- EP-A- 0 934 796
- DE-A- 19 601 005
- US-A- 5 768 412
- US-A- 5 801 765

## Beschreibung

Die Erfindung betrifft ein Verfahren und eine Vorrichtung zur Videoüberwachung von Prozeßanlagen.

In der Prozeßautomatisierung werden oftmals auch Kameras zur Kontrolle und Überwachung von Prozeßanlagen verwendet, deren Bilder über eigene Monitore dem Bedienpersonal zugänglich gemacht werden.

Weiterhin ist es bereits bekannt, mittels einer Kamera aufgenommene Videobilder in Anlagenbilder einzublenden, die dem Bedienpersonal im Rahmen einer Prozeßvisualisierung angezeigt werden. Das Bedienpersonal kann anhand dieser Bilder den Prozeß beobachten und bedienen.

Ferner ist es bereits bekannt, im Rahmen eines sog. Hotspot-Algorithmus Anlagenteile auf Änderungen, wie beispielsweise den Bruch einer Pipeline oder Leitung, den Ausbruch eines Feuers oder das Öffnen einer Ventilklappe, und auf das Auftreten von Bewegungen zu überwachen. Treten derartige Änderungen oder Bewegungen auf, dann wird automatisch ein Alarm ausgelöst, durch welchen das Bedienpersonal aufmerksam gemacht wird und unverzüglich geeignete Gegenmaßnahmen ergreifen kann.

Zur Realisierung dieses Hotspot-Algorithmus wird ein Referenz- bzw. Gutbild erzeugt, welches einer Kameraaufnahme des zu beobachtenden Objekts im Normal- bzw. Gutzustand entspricht. Dieses Referenzbild wird in einem Speicher bzw. einer Datenbank abgelegt und während des Prozeßablaufes zu einem Vergleich mit einem von der Videokamera aufgenommenen Vergleichsbild des zu beobachtenden Objekts herangezogen. Bei diesem Vergleich wird das Referenzbild pixelweise mit dem Vergleichsbild verglichen. Ist die Anzahl der Pixelwerte des Vergleichsbildes, die sich von zugehörigen Pixelwerten des Referenzbildes unterscheiden, größer als ein vorgegebener Schwellenwert, dann wird davon ausgegangen, daß sich das Objekt in unzulässiger Weise bewegt oder verändert hat, und es wird ein Alarm ausgelöst.

Der bekannte Algorithmus weist die Nachteile auf, daß auch Licht-, Farb- und Helligkeitsveränderungen als unerwünschte Änderungen der Pixelwerte detektiert werden, so daß fälschlicherweise ein Alarm ausgelöst wird.

Die Aufgabe der Erfindung besteht darin, einen Weg aufzuzeigen, wie diese Nachteile vermieden oder zumindest reduziert werden können.

Diese Aufgabe wird durch ein Verfahren mit den im Anspruch 1 und eine Vorrichtung mit den im Anspruch 9 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß lediglich geringfügige Änderungen zwischen einem Referenzbild und einem Vergleichsbild, die beispielsweise auf äußere Einflüsse wie das Einfallen von Licht oder Schatten zurückzuführen sind, nicht zu einer unerwünschten Alarmauslösung führen. Auch geringfügige Bewegungen des zu beobachtenden Objekts, die durch den Pixelvergleich erfaßt werden, führen nicht sofort zu einer Alarmauslösung. Mittels der Erfindung ist es somit möglich, stetig leicht veränderlichen Prozessen gerecht zu werden und einen Alarm erst dann auszulösen, wenn die detektierten Veränderungen so groß sind, daß mit hoher Wahrscheinlichkeit ein Störfall vorliegt, dem vom Bedienpersonal entgegengewirkt werden muß.

Vorzugsweise werden von weiteren Referenzbildern lediglich diejenigen Pixelwerte abgespeichert, die sich von den zugehörigen Pixelwerten des ersten Referenzbildes unterscheiden.
Dieses Vorgehen reduziert den Speicherbedarf und auch den zur Durchführung der Vergleichsvorgänge notwendigen Rechenaufwand.

Weiterhin sind der erste und/oder der zweite Schwellenwert in vorteilhafter Weise vom Bedienpersonal veränderbar. Dadurch kann das Bedienpersonal die genannten Schwellenwerte in Abhängigkeit von den konkret vorliegenden Gegebenheiten der Prozeßanlage schnell und einfach optimieren.

Vorzugsweise können als weiteres Kriterium für die Auslösung eines Alarmsignals vorgegebene Bildbereiche als besonders relevant definiert werden und ein Alarmsignal nur dann ausgelöst werden, wenn auch in diesen vorgegebenen Bildbereichen Veränderungen detektiert werden. Ist das zu beobachtende Objekt beispielsweise eine Türe, die sich öffnen und schließen kann, dann können die Kanten dieser Türe als vorgegebene Bildbereiche definiert werden. Eine Alarmauslösung wird nur dann freigegeben, wenn mindestens eine der Türkanten sich im Vergleichsbild an einer anderen Position befindet als im Referenzbild bzw. dann, wenn sich die Türkante im Vergleich zu ihrer Umgebung verändert hat, beispielsweise bezüglich des Winkels.

Weitere vorteilhafte Eigenschaften der Erfindung ergeben sich aus der beispielhaften Erläuterung der Erfindung anhand der Zeichnungen. Es zeigt:
- FIG 1: ein Blockschaltbild einer Vorrichtung zur Videoüberwachung von Prozeßanlagen und
- FIG 2: verschiedene Skizzen einer zu überwachenden Türe.

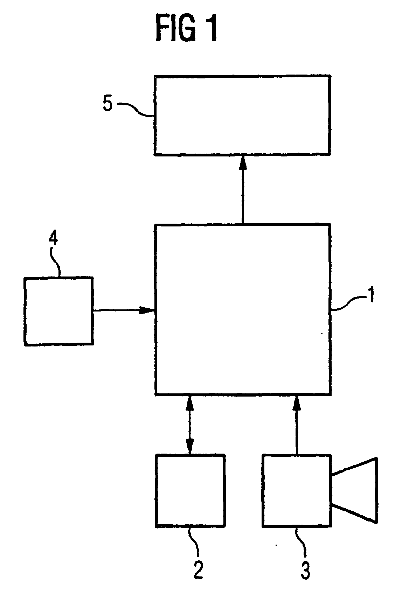

Die Figur 1 zeigt ein Blockschaltbild einer Vorrichtung zur Videoüberwachung von Prozeßanlagen. Diese Vorrichtung, die nur die zum Verständnis der Erfindung notwendigen Bestandteile einer Prozeßanlage zeigt, weist einen Rechner 1, einen Speicher 2, eine Videokamera 3, eine Bedienheit 4 und einen Alarmgeber 5 auf.

Im Speicher 2 ist ein von der Videokamera aufgenommenes Videobild eines zu überwachenden Objektes als erstes Referenzbild abgespeichert. Während des Überwachungsbetriebes wird in vorgegebenen Zeitabständen mittels der Videokamera 3 jeweils ein Vergleichsbild aufgenommen und der Rechnereinehit 1 zugeführt. In dieser Rechnereinheit 1 erfolgt ein pixelweiser Vergleich des aus dem Speicher 2 ausgelesenen ersten Referenzbildes mit dem von der Videokamera 3 gelieferten Vergleichsbild.

Die Anzahl der voneinander abweichenden Pixelwerte wird von der Rechnereinheit 1 gezählt und mit einem ersten Schwellenwert verglichen.

Überschreitet die Anzahl der voneinander abweichenden Pixelwerte der Bilder den ersten Schwellenwert, dann steuert der Rechner 1 den Alarmgeber 5 zur Ausgabe eines Alarmsignals an. Der Alarmgeber 5 kann ein akustischer Alarmgeber sein, der einen Warnton aussendet, und/oder ein optischer Alarmgeber, mittels dessen auf einer Bildanzeigeeinheit ein beispielsweise blinkendes Warnsignal ausgegeben wird.

Erreicht die Anzahl der voneinander abweichenden Pixelwerte der Bilder den ersten Schwellenwert nicht, ist aber größer als ein zweiter Schwellenwert, der kleiner ist als der erste Schwellenwert, dann erkennt der Rechner 1, daß Veränderungen zwischen den miteinander verglichenen Bildern vorliegen. Er klassifiziert aufgrund seiner Programmierung diese Veränderungen, deren Anzahl zwischen dem ersten und dem zweiten Schwellenwert liegt, als Veränderungen, die noch keine Alarmauslösung rechtfertigen und auf unschädliche Veränderungen der Umgebungshelligkeit, dadurch hervorgerufene Farbabweichungen oder geringfügige Bewegungen des zu überwachenden Objektes zurückzuführen sind. Er steuert aber die Abspeicherung des vorliegenden Vergleichsbildes im Speicher 2 als zweites Referenzbild. Zur Einsparung von Speicherplatz ist es auch möglich, lediglich diejenigen Pixelwerte des Vergleichsbildes im Speicher 2 abzuspeichern, die sich im Vergleich zum ersten Referenzbild verändert haben.

Erreicht die Anzahl der voneinander abweichenden Pixelwerte der Bilder den zweiten Schellenwert nicht, dann wird keine Veränderung zwischen den beiden miteinander verglichenen Bildern detektiert und das von der Videokamera gelieferte Vergleichsbild wieder verworfen, d.h. nicht abgespeichert.

Wurde als Reaktion auf den ersten Vergleichsvorgang ein zweites Referenzbild abgespeichert, dann werden beim zeitlich nächsten Vergleichsvorgang beide Referenzbilder mit dem von der Videokamera 3 gelieferten neuen Vergleichsbild verglichen.

Erreicht die Anzahl der voneinander abweichenden Pixelwerte der Bilder beim Vergleich beider Referenzbilder mit dem von der Videokamera 3 gelieferten neuen Vergleichsbild den zweiten Schwellenwert nicht, dann wird dieses neue Vergleichsbild verworfen.

Liegt die Anzahl der voneinander abweichenden Pixelwerte der Bilder beim Vergleich beider Referenzbilder mit dem von der Videokamera 3 gelieferten neuen Vergleichsbild für zumindest einen dieser beiden Vergleichsvorgänge zwischen dem ersten und dem zweiten Schwellenwert, dann wird das neue Vergleichsbild als drittes Referenzbild abgespeichert und für nachfolgende Vergleichsvorgänge als weiteres Referenzbild verwendet.

Übersteigt die Anzahl der voneinander abweichenden Pixelwerte der Bilder bei diesen beiden Vergleichsvorgängen jeweils den vorgegebenen ersten Schwellenwert, dann interpretiert der Rechner 1 dies als Vorliegen einer Störung und steuert den Alarmgeber 5 zur Ausgabe eines Alarms an.

Durch die vorstehend beschriebene Aufnahme weiterer Referenzbilder in den Speicher erhöht sich zwar die Anzahl der bei jedem Verfahrensschritt durchzuführenden Pixelvergleiche, doch wächst mit der Anzahl der verwendeten Referenzbilder die Sicherheit im Erkennen von zulässigen, leicht anwachsenden Veränderungen auf der einen und von Prozeßstörungen auf der anderen Seite. Beim Erkennen von Prozeßstörungen wird ein Alarmsignal ausgegeben, aufgrund dessen das Bedienpersonal schnell wirksame Gegenmaßnahmen in die Wege leiten kann.

Werden - wie bereits oben angegeben - bezüglich der weiteren Referenzbilder lediglich Pixelwerte abgespeichert, die sich von entsprechenden Pixelwerten des ersten Referenzbildes unterscheiden, dann können in vorteilhafter Weise zur Einsparung von Rechenaufwand bei späteren Vergleichsvorgängen lediglich diese abgespeicherten Pixelwerte des weiteren Referenzbildes mit den zugehörigen Pixelwerten eines neuen Vergleichsbildes verglichen werden.

Um die Erkennsicherheit weiter zu verbessern, wird ein vorgegebener Bildbestandteil des ersten Referenzbildes als besonders relevanter Bildbestandteil definiert und seitens des Rechners 1 die Ausgabe eines Alarmsignals nur dann freigegeben, wenn die Anzahl der voneinander abweichenden Pixelwerte der miteinander verglichenen Bilder den ersten Schwellenwert überschreitet und im Sinne eines Zusatzkriteriums auch im vorgegebenen, besonders relevanten Bildbestandteil Veränderungen aufgetreten sind.

Handelt es sich bei dem zu überwachenden Objekt beispielsweise um eine sich öffnende und schließende Türe, dann kann die äußere Kontur dieser Türe oder eine der Türkanten als relevanter Bildbereich definiert werden. Ändert sich die Türkante, beispielsweise bezüglich ihres Winkels, relativ zu ihrer Umgebung, dann wird dies als Veränderung des zu beobachtenden Objektes interpretiert.

Weiterhin sind in vorteilhafter Weise die beiden Schwellenwerte mittels einer an den Rechner 1 angeschlossenen Bedieneinheit 4 veränderbar. Dies eröffnet dem Bedienpersonal die Möglichkeit, in Abhängigkeit von den am jeweiligen Aufstellungsort der Prozeßanlage herrschenden Einsatzbedingungen die genannten Schwellenwerte zu optimieren. Ist beispielsweise am Aufstellungsort der Anlage zu erwarten, daß häufig Helligkeitsänderungen auftreten, kann der erste Schwellenwert, bei dessen Überschreiten ein Alarm ausgelöst wird, erhöht werden.

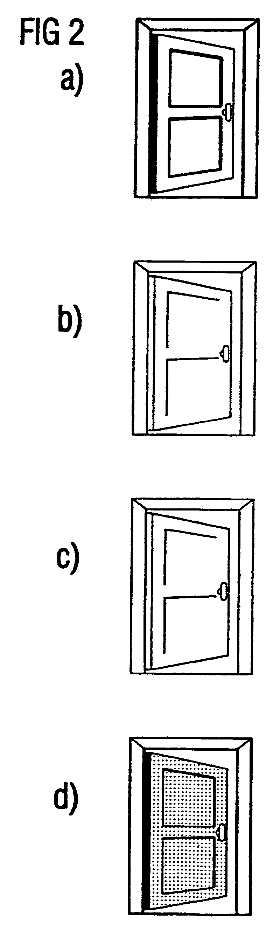

Die Figur 2 zeigt zur Veranschaulichung der Erfindung verschiedene Skizzen einer zu überwachenden Türe. In der Figur 2a ist die zu überwachende Türe bei normalen Lichtverhältnissen gezeigt. Dieses Bild ist als erstes Referenzbild im Speicher 2 abgespeichert. Wird während des Ablaufs des Prozesses nach beispielsweise einer Minute von der Kamera das in der Figur 2b gezeigte Bild der Türe geliefert, dann zeigt sich, daß die Türkonturen unverändert sind, aber durch die einfallende Helligkeit eine Anzahl von Pixeln, die zwischen dem ersten und dem zweiten Schwellenwert liegt, verändert ist. Folglich wird dieses Vergleichsbild oder zumindest die sich vom ersten Referenzbild unterscheidenden Pixelwerte dieses Vergleichsbildes als zweites Referenzbild im Speicher 2 abgespeichert und beim späteren Vergleich mit neuen, von der Kamera 3 gelieferten Vergleichsbildern zusätzlich berücksichtigt.

Nach Ablauf einer weiteren Minute wird von der Videokamera 3 das in der Figur 2c gezeigte neue Vergleichsbild an den Rechner 1 geliefert. Da dieses Bild pixelidentisch mit dem in der Figur 2b gezeigten Bild ist, braucht es nicht weiter betrachtet zu werden und wird verworfen.

Schließlich wird eine weitere Minute später von der Videokamera 3 das in der Figur 2d gezeigte neue Vergleichsbild dem Rechner 1 zugeführt und dort mit den beiden abgespeicherten Referenzbildern verglichen. Auch bei diesem neuen Vergleichsbild sind die Türkonturen unverändert. Im Vergleich zu den beiden Referenzbildern treten lediglich Helligkeitsunterschiede auf. Die Anzahl der Pixelwerte des neuen Vergleichsbildes, die sich im Vergleich zum ersten Referenzbild verändert haben, ist zwar größer als der zweite Schellenwert, doch kleiner als der erste Schwellenwert. Folglich wird auch dieses Vergleichsbild als neues, zusätzliches Referenzbild im Speicher 2 abgespeichert und bei späteren Vergleichsvorgängen als zusätzliches Referenzbild verwendet.

Ein Alarm wird nur dann ausgelöst, wenn die Anzahl der sich unterscheidenden Pixelwerte des jeweils neuen Vergleichsbildes im Vergleich zu jedem der vorhandenen Referenzbilder größer ist als der vorgegebenen erste Schwellenwert.

Als Zusatzkriterium zur Alarmauslösung kann auch die Anzahl von veränderten Pixelwerten in einem definierten vorgegebenen Bildbereich verwendet werden.

## Patentansprüche

1. Verfahren zur Videoüberwachung von Prozeßanlagen, bei welchem ein abgespeichertes erstes Referenzbild der Anlage mit einem von einer Videokamera aufgenommenen ersten Vergleichsbild pixelweise verglichen wird und dann ein Alarmsignal ausgegeben wird, wenn die Anzahl der Pixelwerte des Vergleichsbildes, die sich von zugehörigen Pixelwerten des Referenzbildes unterscheiden, größer ist als ein vorgegebener erster Schwellenwert, **dadurch gekennzeichnet, daß** dann, wenn die Anzahl die Pixelwerte des Vergleichsbildes, die sich von zugehörigen Pixelwerten des Referenzbildes unterscheiden, kleiner ist als der erste Schwellenwert aber größer als ein vorgegebener zweiter Schwellenwert, der kleiner ist als der erste Schwellenwert, das erste Vergleichsbild als zweites Referenzbild abgespeichert wird und daß bei nachfolgenden Vergleichsvorgängen das erste und das zweite Referenzbild mit einem von der Videokamera aufgenommenen Vergleichsbild verglichen werden.

2. Verfahren nach Anspruch 1, **dadurch gekennzeichnet, daß** ein Alarmsignal dann ausgegeben wird, wenn bei beiden Vergleichsvorgängen die Anzahl der sich unterscheidenden Pixelwerte größer ist als der vorgegebene erste Schwellenwert.

3. Verfahren nach Anspruch 1 oder 2, **dadurch gekennzeichnet, daß** im Rahmen weiterer Verfahrensschritte weitere Referenzbilder abgespeichert werden und auch diese bei der Durchführung nachfolgender Verfahrensschritte mit einem von der Videokamera aufgenommenen Vergleichsbild verglichen werden.

4. Verfahren nach einem der vorhergehenden Ansprüche, **dadurch gekennzeichnet, daß** vom ersten Referenzbild sämtliche Pixelwerte abgespeichert werden und von den weiteren Referenzbildern lediglich diejenigen Pixelwerte, die sich von den zugehörigen Pixelwerten des ersten Referenzbildes unterscheiden.

5. Verfahren nach Anspruch 4 , **dadurch gekennzeichnet, daß** von den weiteren Referenzbildern lediglich die abgespeicherten Pixelwerte mit zugehörigen Pixelwerten eines Vergleichsbildes verglichen werden.

6. Verfahren nach einem der vorhergehenden Ansprüche, **dadurch gekennzeichnet, daß** der erste und/oder zweite Schwellenwert veränderbar ist/sind.

7. Verfahren nach einem der vorhergehenden Ansprüche, **dadurch gekennzeichnet, daß** als zusätzliches Kriterium vorgegebene Bildbereiche auf das Auftreten von Änderungen überwacht werden und daß ein Alarmsignal nur dann ausgegeben wird, wenn bezüglich dieser. vorgegebenen Bildbereiche Änderungen detektiert werden.

8. Verfahren nach Anspruch 7 , **dadurch gekennzeichnet, daß** die vorgegebenen Bildbereiche im ersten Referenzbild vorhandene Kanten sind.

9. Vorrichtung zur Videoüberwachung von Prozeßanlagen mit
- einem Rechner (1),
- einem mit dem Rechner verbundenen Speicher (2), der zur Abspeicherung von Referenzbildern vorgesehen ist,
- einer Videokamera (3), die ausgangsseitig mit dem Rechner (1) verbunden ist, und
- einem an dem Rechner (1) angeschlossenen Alarmgeber (5), wobei der Rechner derart programmiert ist, daß
- er ein aus dem Speicher ausgelesenes erstes Referenzbild mit einem von der Videokamera aufgenommenen Vergleichsbild pixelweise vergleicht und dann, wenn die Anzahl der Pixelwerte des Vergleichsbildes, die sich von zugehörigen Pixelwerten des Referenzbildes unterscheiden, größer ist als ein erster Schwellenwert, den Alarmgeber zur Ausgabe eines Alarmsignals ansteuert,
- dann, wenn die Anzahl der Pixelwerte des Vergleichsbildes, die sich von zugehörigen Pixelwerten des Referenzbildes unterscheiden, kleiner ist als der erste Schwellenwert aber größer als ein vorgegebener zweiter Schwellenwert, der kleiner ist als der erste Schwellenwert, eine Abspeicherung des ersten Vergleichsbildes im Speicher als zweites Referenzbild steuert, und
- bei nachfolgenden Vergleichsvorgängen das erste und das zweite Referenzbild mit einem von der Videokamera aufgenommenen neuen Vergleichsbild vergleicht.

10. Vorrichtung nach Anspruch 9 , **dadurch gekennzeichnet, daß** der Rechner derart programmiert ist, daß er den Alarmgeber dann zur Ausgabe eines Alarmsignals ansteuert, wenn die bei den Vergleichsvorgängen ermittelte Anzahl der sich unterscheidenden Pixelwerte größer ist als der vorgegebene erste Schwellenwert.

11. Vorrichtung nach Anspruch 9 oder 10, **dadurch gekennzeichnet, daß** der Rechner derart programmiert ist, daß er im Rahmen weiterer Verfahrensschritte eine Abspeicherung weiterer Referenzbilder steuert und auch diese bei der Durchführung nachfolgender Verfahrensschritte mit einem von der Videokamera aufgenommenen Vergleichsbild vergleicht.

12. Vorrichtung nach einem der Ansprüche 9 bis 11, **dadurch gekennzeichnet, daß** der Rechner derart programmiert ist, daß er die Abspeicherung weiterer Referenzbilder derart steuert, daß lediglich diejenigen Pixelwerte gespeichert werden, die sich von den zugehörigen Pixelwerten des ersten Referenzbildes unterscheiden.

13. Vorrichtung nach Anspruch 12 , **dadurch gekennzeichnet, daß** der Rechner derart programmiert ist, daß er bei weiteren Vergleichsvorgängen von den weiteren Referenzbildern lediglich die abgespeicherten Pixelwerte mit zugehörigen Pixelwerten eines Vergleichsbildes vergleicht.

14. Vorrichtung nach einem der Ansprüche 9 bis 13, **dadurch gekennzeichnet, daß** sie eine Bedieneinheit (4) aufweist, mittels der ein veränderter Schwellenwert eingebbar ist.

15. Vorrichtung nach einem der Ansprüche 9 bis 14, **dadurch gekennzeichnet, daß** der Rechner derart programmiert ist, daß er den Alarmgeber nur dann zur Ausgabe eines Alarmsignals ansteuert, wen bezüglich vorgegebener Bildbereiche des Referenzbildes Änderungen auftreten.

## Claims

1. Method for video monitoring of process plants, in which a stored first reference image of the plant is compared pixel by pixel with a first comparison image recorded by a video camera, and an alarm signal is output when the number of pixel values of the comparison image that differ from the associated pixel values of the reference image is greater than a specified first threshold value, **characterised in that**, when the number of pixel values of the comparison image that differ from the associated pixel values of the reference image is less than the first threshold value, but greater than a specified second threshold value that is less than the first threshold value, the first comparison image is stored as a second reference image, and that in subsequent comparison operations, the first and the second reference image are compared with a comparison image recorded by the video camera.

2. Method according to Claim 1, **characterised in that** an alarm signal is output when the number of pixel values that differ from each other is greater than the specified first threshold value in both comparison operations.

3. Method according to Claim 1 or 2, **characterised in that**, as part of additional method steps, additional reference images are stored, and in the execution of subsequent method steps these are also compared with a comparison image recorded by the video camera.

4. Method according to one of the preceding claims, **characterised in that** all the pixel values are stored from the first reference image, and from the additional reference images only those pixels that differ from the associated pixel values of the first reference image.

5. Method according to Claim 4, **characterised in that** from the additional reference images, only the stored pixel values are compared with associated pixel values of a comparison image.

6. Method according to one of the preceding claims, **characterised in that** the first and/or second threshold value can be changed.

7. Method according to one of the preceding claims, **characterised in that**, as an additional criterion, selected image areas are monitored for the occurrence of changes, and that an alarm signal is only output when changes are detected with regard to these selected image areas.

8. Method according to Claim 7, **characterised in that** the selected image areas are edges present in the first reference image.

9. Device for video monitoring of process plants, having
- a computer (1)
- a memory (2) connected to the computer, which is provided for storing reference images,
- a video camera (3) whose output is connected to the computer (1), and
- an alarm generator (5) connected to the computer (1), the computer being programmed in such a way that
- it compares pixel by pixel a first reference image read from the memory with a comparison image recorded by the video camera, and when the number of pixel values of the comparison image that differ from associated pixel values of the reference image is greater than a first threshold value, it forces the alarm generator to output an alarm signal,
- when the number of pixel values of the comparison image that differ from associated pixel values of the reference image is less than the first threshold value, but greater than a specified second threshold value that is less than the first threshold value, it forces the first comparison image to be stored in the memory as a second reference image, and
- in subsequent comparison operations, it compares the first and the second reference image with a new comparison image recorded by the video camera.

10. Device according to Claim 9, **characterised in that** the computer is programmed in such a way that it forces the alarm generator to output an alarm signal when the number of differing pixel values found during the comparison operations is greater than the specified first threshold value.

11. Device according to Claim 9 or 10, **characterised in that** the computer is programmed in such a way that it forces additional reference images to be stored as part of additional method steps, and also compares these, during execution of subsequent method steps, with a comparison image recorded by the video camera.

12. Device according to one of the Claims 9 to 11, **characterised in that** the computer is programmed in such a way that it forces additional reference images to be stored such that only those pixel values are stored that differ from the associated pixel values of the first reference image.

13. Device according to Claim 12, **characterised in that** the computer is programmed in such a way that in additional comparison operations of the additional reference images, it only compares the stored pixel values with associated pixel values of a comparison image.

14. Device according to one of the Claims 9 to 13, **characterised in that** it has an operating unit (4), which can be used to input a modified threshold value.

15. Device according to one of the Claims 9 to 14, **characterised in that** the computer is programmed in such a way that it only forces the alarm generator to output an alarm signal when changes occur with regard to selected image areas of the reference image.

## Revendications

1. Procédé de vidéosurveillance d'installations de processus, dans lequel on compare pixel par pixel une première image de référence mémorisée de l'installation à une première image de comparaison enregistrée par une caméra vidéo et on délivre un signal d'alarme lorsque le nombre des valeurs de pixels de l'image de comparaison qui se distinguent de valeurs de pixels associées de l'image de référence est supérieur à une première valeur de seuil prédéterminée, **caractérisé par le fait que**, si le nombre des valeurs de pixels de l'image de comparaison qui se distinguent de valeurs de pixels associées de l'image de référence est inférieur à la première valeur de seuil prédéterminée mais supérieur à une deuxième valeur de seuil prédéterminée qui est inférieure à la première valeur de seuil, on mémorise la première image de comparaison comme deuxième image de référence et que, lors des comparaisons suivantes, on compare la première et la deuxième image de référence à une image de comparaison enregistrée par la caméra vidéo.

2. Procédé selon la revendication 1, **caractérisé par le fait qu'**on délivre un signal d'alarme lorsque, lors des deux comparaisons, le nombre des valeurs de pixels différentes est supérieur à la première valeur de seuil prédéterminée.

3. Procédé selon la revendication 1 ou 2, **caractérisé par le fait que**, dans le cadre d'autres étapes du procédé, on mémorise d'autres images de référence et on compare aussi celles-ci, lors de l'exécution d'étapes de procédé suivantes, à une image de comparaison enregistrée par la caméra vidéo.

4. Procédé selon l'une des revendications précédentes, **caractérisé par le fait que**, de la première image de référence, on mémorise toutes les valeurs de pixels et, des autres images de référence, on mémorise seulement les valeurs de pixels qui sont différentes des valeurs de pixels associées de la première image de référence.

5. Procédé selon la revendication 4, **caractérisé par le fait que**, des autres images de référence, on compare seulement les valeurs de pixels mémorisées à des valeurs de pixels associées d'une image de comparaison.

6. Procédé selon l'une des revendications précédentes, **caractérisé par le fait que** la première et/ou la deuxième valeur de seuil sont variables.

7. Procédé selon l'une des revendications précédentes, **caractérisé par le fait que**, comme critère supplémentaire, on surveille des zones d'image prédéterminées quant à l'apparition de modifications et qu'on ne délivre un signal d'alarme que lorsque des modifications ont été détectées dans ces zones d'image prédéterminées.

8. Procédé selon la revendication 7, **caractérisé par le fait que** les zones d'image prédéterminées sont des arêtes présentes dans la première image de référence.

9. Dispositif de vidéosurveillance d'installations de processus, comportant :
- un ordinateur (1),
- une mémoire (2) qui est reliée à l'ordinateur et qui est prévue pour la mémorisation d'images de référence,
- une caméra vidéo (3) qui est reliée en sortie à l'ordinateur (1), et
- un générateur d'alarme (5) qui est raccordé à l'ordinateur (1), l'ordinateur étant programmé de telle sorte que
- il compare pixel par pixel une première image de référence lue dans la mémoire à une image de référence enregistrée par la caméra vidéo et, lorsque le nombre des valeurs de pixels de l'image de comparaison qui se distinguent de valeurs de pixels associées de l'image de référence est supérieur à une première valeur de seuil, il commande le générateur d'alarme pour que celui-ci délivre un signal d'alarme,
- lorsque le nombre des valeurs de pixels de l'image de comparaison qui se distinguent de valeurs de pixels associées de l'image de référence est inférieur à la première valeur de seuil mais supérieur à une deuxième valeur de seuil prédéterminée qui est inférieure à la première valeur de seuil, il commande une mémorisation de la première image de comparaison comme deuxième image de référence dans la mémoire, et
- lors des comparaisons suivantes, il compare la première et la deuxième image de référence à une nouvelle image de comparaison enregistrée par la caméra vidéo.

10. Dispositif selon la revendication 9, **caractérisé par le fait que** l'ordinateur est programmé de telle sorte qu'il commande le générateur d'alarme pour que celui-ci délivre un signal d'alarme lorsque le nombre, déterminé lors des comparaisons, des valeurs de pixels qui se distinguent est supérieur à la première valeur de seuil prédéterminée.

11. Dispositif selon la revendication 9 ou 10, **caractérisé par le fait que** l'ordinateur est programmé de telle sorte que, dans le cadre d'autres étapes du procédé, il commande une mémorisation d'autres images de référence et il compare aussi celles-ci, lors de l'exécution d'étapes de procédé suivantes, à une image de comparaison enregistrée par la caméra vidéo.

12. Dispositif selon l'une des revendications 9 à 11, **caractérisé par le fait que** l'ordinateur est programmé de telle sorte qu'il commande la mémorisation d'autres images de référence de manière à ne mémoriser que les valeurs de pixels qui se distinguent des valeurs de pixels associées de la première image de référence.

13. Dispositif selon la revendication 12, **caractérisé par le fait que** l'ordinateur est programmé de telle sorte que, lors d'autres comparaisons, il ne compare des autres images de référence que les valeurs de pixels mémorisées à des valeurs de pixels associées d'une image de comparaison.

14. Dispositif selon l'une des revendications 9 à 13, **caractérisé par le fait qu'**il comporte une unité de contrôle (4) au moyen de laquelle une valeur de seuil modifiée peut être entrée.

15. Dispositif selon l'une des revendications 9 à 14, **caractérisé par le fait que** l'ordinateur est programmé de telle sorte qu'il ne commande le générateur d'alarme pour que celui-ci délivre un signal d'alarme que lorsque des modifications apparaissent dans des zones d'image prédéterminées de l'image de référence.
